# EUROPEAN PATENT SPECIFICATION

(11) **EP 0 607 324 B1**
(45) Date of publication and mention of the grant of the patent: **28.08.1996**
(21) Application number: 92922064.8
(22) Date of filing: 06.10.1992
(51) Int. Cl.: C08J 5/04, C08J 11/06, B29C 70/12

(54) **USE OF NON-WOVEN, NEEDLED FIBROUS MAT MATERIAL**
VERWENDUNG EINES GENADELTEN NICHT GEWEBTEN FASERBAHNMATERIALS
UTILISATION D'UN MATERIAU SOUS FORME DE MAT FIBREUX AIGUILLETE ET NON TISSE

(30) Priority: 07.10.1991 NL 9101687
(43) Date of publication of application: 27.07.1994
(73) Proprietor: DESMEPOL B.V., NL-6827 BR Arnhem (NL); Mets, Benjamin, NL-6731 EG Otterlo (NL)
(72) Inventor: METS, Benjamin, NL-6731 EG Otterlo (NL)
(74) Representative: de Bruijn, Leendert C.
(86) International application number: NL9200178
(87) International publication number: WO9307202

(56) References cited:
- EP-A- 0 176 848
- DE-C- 4 012 159
- US-A- 3 953 632
- US-A- 4 673 615
- US-A- 4 885 205

## Description

The invention relates to the use of non-woven, needled fibrous mat material.

It is known for non-woven, needled fibrous at material to be used as carpet backing, filter material, backing material for coverings, cleaning cloths, and as a substitute for felt and the like.

Surprisingly, it was found according to the invention that already bonded non-woven, needled fibrous mat material can be used as reinforcing material in a polymer binder/polymer matrix.

The invention therefore relates to the use of non-woven, needled fibrous mat material containing bonded fibres of polyester and/or polyamide as reinforcing material in a polymer binder or polymer matrix, the fibrous mat material being in the form of cuttings. Such fibrous mat material is widely available, and is comparatively cheap.

According to the invention, it is preferable for the fibres of the fibrous mat material to be bonded with an adhesive based on acrylate or melamine.

Non-woven, needled fibrous mat materials which are found to be satisfactory according to the invention are the commercial products Colbond ("dry laid needled and chemically bonded non-woven made from Diolen polyester staple fibre") and Coltron ("polyester filament, non-woven spray laid. needled and thermally bonded"). In this case we are concerned with, for example, so-called geotextile materials which are used in roadbuilding.

When it is used as reinforcing material the fibrous mat material is in the form of cuttings, and not in the form of webs or large sheets. Such cuttings are often obtained directly as waste during the production and processing of the fibrous mat material in the usual applications.

It goes without saying that it is also possible to cutting, chop, cut or otherwise shred a web of the fibrous mat material in order to obtain the reinforcing material in the form suitable for use according to the invention. It is preferable for the surface area of the cuttings of the fibrous mat material to lie in the region of 1 mm² - 150 cm², in particular 5 mm² - 50 cm².

The fibrous mat material used according to the invention is of a weight which is, for example, of the order of magnitude of 100 - 500 g/m².

The non-woven, needled fibrous mat materials described above can be processed with conventional thermosetting binders to a composite product. The polymer binder is, however, preferably a water-soluble, thermosetting resin, for example a urea/melamine/phenol/formaldehyde resin or combinations thereof. In general, the thermosetting resins which harden under pressure and temperature, such as resins for moulding powders and high-pressure and low-pressure laminates, can be used. Examples of suitable resins can be found in the book Urea Formaldehyde Resin, Beatmeyer, 1979 (ISBN 0-2901-04558-3).

Non-woven, needled fibrous mat materials made of bonded fibres of synthetic polymers such as polyesters are known from e.g. EP-A-0 176 848. The manufacturing of such mats produces cuttings as waste. The present invention solves the technical problem of finding an end-use for such waste.

EP-A-0 304 133 describes a skin-shaped product comprising an aminoplast resin mixture and a fibrous material, wherein the resin mixture has a viscosity of more than 25 Pa.s at 120°C and the fibrous material has a tensile strength of at least 1 MPa at 20°C. This skin-shaped product is a so-called prepreg for SMC (sheet moulding compound). Such a prepreg is almost dry at room temperature and has a very high viscosity. The tensile strength of the fibrous material is determined by the strength necessary to resist the forces that are generated when the fibrous material is impregnated and in further processing, such as drying, rolling, lifting, etc. The viscosity of the resin is such that the fibrous material is pulled apart during moulding. This is essential because in SMC-applications a mould is filled to only 30-80 % of its area. It will be clear that these prepregs cannot be compared with the composite material of the present invention.

The invention also relates to a method for producing a composite material by combining a reinforcing material with a polymer binder or a polymer matrix, in which the reinforcing material used is non-woven, needled fibrous mat material containing polyester and/or polyamide, the fibres of the fibrous mat material being bonded with an adhesive and the fibrous mat material being in the form of cuttings.

In the method according to the invention an already bonded fibrous mat material is thus again impregnated with adhesive.

In the method according to the invention the same preferred embodiments as those in the application according to the invention described above are applicable.

The method according to the invention can be carried out according to principles which are generally known for the production of composite materials based on a polymer binder/polymer matrix and a reinforcing material. For example, (a solution of) the binder can be applied to the reinforcing material by immersion, impregnation or spraying, following which hardening takes place in, for example, a mould. In general, a temperature of 70 - 220°C, preferably 140-180°C and a pressure of 15 - 200 kg/cm² are applied here.

The polymer binder is preferably used as a solution in water. This ensures a better distribution of the thermosetting resin. Besides, water is environmentally friendly.

The proportion in which the non-woven, needled fibrous mat material and the polymer binder are used according to the invention can vary within wide limits. However, it is preferable to use at least 5 parts by weight of polymer binder (calculated as dry matter) per 100 parts by weight of needled fibrous mat material.

In general, no more than 350 parts by weight of polymer agent to 100 parts by weight of reinforcing material will be used.

If in the method according to the invention an aqueous solution of the polymer binder is used, it may be necessary to carry out an interim drying because too large a quantity of water adversely affects the appearance of the product.

In general, the combination of reinforcing material and polymer binder can be pressed directly, i.e. when wet, if the total quantity of water of the combination does not exceed 15 % by weight. From a quantity of 15 % by weight of water onwards, however, it is preferable to dry, in order to avoid the abovementioned adverse effects. Besides, the combination can actually contain up to 200 % by weight of water before drying.

The invention also relates to a composite material which is obtainable by the method described above.

The invention also relates to a laminate, of which at least one layer contains the composite material according to the invention. It is, for example, possible to cover boards such as particle board with a non-hardened combination of reinforcing material and polymer binder, following which hardening takes place in the usual way, for example under the influence of heat and/or pressure. It is also possible to use the composite material as layers in sandwich structures.

The sandwich structures according to the present invention can comprise a multiplicity of layers placed on top of each other. For example, a three-ply structure can comprise a core layer of known board material and two outer layers of the combination of reinforcing material and polymer binder according to the invention. It is also possible for the core layer of a three-ply structure to be formed by the combination of reinforcing material and polymer binder, while the outer layers are known sheet materials such as particle board or MDF.

In the production of the sandwich structures use is made of a finished - i.e. already pressed - board, or of sheet material which is not yet hardened, i.e. the adhesive-coated fibres for particle board or MDF.

It is also possible according to the invention to use the non-woven, needled fibrous mat material combined with already known reinforcing materials in a polymer binder or a polymer matrix. Examples of known fibres are the (adhesive-coated) fibres for particle board or MDF. Such a composite material can also be used in the sandwich structures discussed above. For example, non-woven, needled fibrous mat material (with already bonded fibres) in the form of cuttings or flakes can thus be impregnated with resin (polymer binder) in the bottom of a flat mould, following which hardening may or may not take place. A mixture of cuttings of the fibrous mat material and, for example, adhesive-coated cuttings is then placed on this layer and pressed onto the bottom layer already present in the mould. Another layer - for example, corresponding to the bottom layer already in the mould - is then applied. This produces a laminate with an identical top and bottom layer, the middle layer being a polymer matrix in which a mixture of reinforcing materials is present. Of course, many variations of such a method of working are possible.

It is extremely surprising that the application or method according to the invention produces a composite material which has an attractive decorative effect - resembling, for example, marble or granite. It is also possible to sand the surface of the hardened composite material, as a result of which the surface feels like suede or velvet, and does not give the usual cold effect of, for example, melamine laminate. The decorative effect depends on, for example, the size of the cuttings and the colour of the cuttings or the resin.

The use of non-woven, needled fibrous mat material produces a material with an unexpectedly high impact resistance and/or toughness and/or elasticity.

Pressed products according to the invention have the advantageous property that they do not splinter or cut, or at least they have these tendencies to a much lesser degree than the products made from conventional moulding powders without the use of non-woven, needled fibrous mat materials as reinforcing material.

The invention is explained further in the examples which follow.

### Example I

500 g Colbond cuttings, impregnated with 30 % by weight of a conventional formaldehyde/urea resin, is pressed at a temperature of 160°C and at a pressure of 25 kg/cm². A high-gloss marble effect is obtained.

### Example II

Example I is repeated, except that the non-hardened composition is applied to both sides of particle board or MDF, while the hardening takes place under the conditions mentioned. A board which is suitable as a partition is obtained. If the surface of the board is sanded, a suede-like surface (fabric feel) is obtained, and not the cold effect of a melamine laminate. The board is easy to screw and nail.

### Example III

The non-hardened combination of Example I, in which there is impregnation with 130 % by weight of resin, is pressed in a mould at 160° and at a pressure of 120 kg/cm² to produce a product of great toughness which is slightly translucent and has a marble effect. Compared with products made from conventional moulding powders, the product according to the invention has the advantage that it is less likely to splinter.

## Claims

1. Use of non-woven, needled fibrous mat material containing bonded fibres of polyester and/or polyamide as reinforcing material in a polymer binder or polymer matrix, the fibrous mat material being in the form of cuttings.

2. Use according to Claim 1, in which the polymer binder or the polymer matrix is a water-soluble thermosetting resin.

3. Use according to Claim 2, in which the resin is a urea, melamine, phenol or formaldehyde resin.

4. Method for producing a composite material by combining a reinforcing material with a polymer binder or a polymer matrix, in which the reinforcing material used is non-woven, needled fibrous mat material containing polyester and/or polyamide, the fibres of the fibrous mat material being bonded with an adhesive and the fibrous mat material being in the form of cuttings.

5. Method according to Claim 4, in which the composite material is manufactured at a temperature of 70-220°C and at a pressure of 15-200 kg/cm².

6. Method according to Claim 4 or 5, in which the polymer binder is used as a solution in water.

7. Method according to Claims 4 - 6, in which at least 5 parts by weight and at most 350 parts by weight of polymer binder to 100 parts by weight of reinforcing material is used.

8. Composite material obtainable according to Claims 4 - 7.

9. Laminate of which at least one layer comprises the composite material according to Claim 8.

## Patentansprüche

1. Verwendung eines genadelten, nicht gewebten Faserbahnmaterials, enthaltend geklebte Fasern aus Polyester und/oder Polyamid als verstärkendes Material in einem polymeren Bindemittel oder einer polymeren Matrix, wobei das Faserbahnmaterial in der Form von Schnitzeln vorliegt.

2. Verwendung gemäß Anspruch 1, wobei das polymere Bindemittel oder die polymere Matrix ein wasserlösliches wärmehärtendes Harz ist.

3. Verwendung gemäß Anspruch 2, wobei das Harz ein Harnstoff-, Melamin-, Phenoloder Formaldehydharz ist.

4. Verfahren zur Herstellung eines Verbundwerkstoffs durch Kombination eines verstärkenden Materials mit einem polymeren Bindemittel oder einer polymeren Matrix, in dem das verwendete verstärkende Material genadeltes, nicht gewebtes Faserbahmnaterial ist, enthaltend Polyester und/oder Polyamid, wobei die Fasern des Faserbahnmaterials mit einem Klebstoff geklebt werden und das Faserbahnmaterial in der Form von Schnitzeln vorliegt.

5. Verfahren gemäß Anspruch 4, in dem der Verbundwerkstoff bei einer Temperatur von 70-220°C und bei einem Druck von 15-200kg/cm² hergestellt wird.

6. Verfahren gemäß Anspruch 4 oder 5, in dem das polymere Bindemittel als eine Lösung in Wasser verwendet wird.

7. Verfahren gemäß den Ansprüchen 4-6, in dem mindestens 5 Gewichtsteile und höchstens 350 Gewichtsteile des polymeren Bindemittels auf 100 Gewichtsteile des verstärkenden Materials verwendet werden.

8. Verbundwerkstoff, erhältlich gemäß den Ansprüchen 4-7.

9. Laminat, von dem zumindest eine Schicht den Verbundwerkstoff gemäß Anspruch 8 umfaßt.

## Revendications

1. Utilisation d'un matériau sous la forme d'un mat fibreux aiguilleté et non tissé contenant des fibres agglomérées de polyester et/ou polyamide en tant que matériau de renfort dans un liant polymère ou une matrice polymère, le mat fibreux étant sous forme de fragments.

2. Utilisation selon la revendication 1, dans laquelle le liant polymère ou la matrice polymère est une résine thermodurcissable soluble dans l'eau.

3. Utilisation selon la revendication 2, dans laquelle la résine est une résine d'urée ou de mélamine, ou une résine phénolique ou une résine formaldéhyde.

4. Un procédé pour produire un matériau composite en combinant un matériau de renfort avec un liant polymère ou une matrice polymère, dans lequel le matériau de renfort utilisé est un matériau sous forme de mat fibreux, aiguilleté et non tissé contenant du polyester et/ou du polyamide, les fibres du mat fibreux étant agglomérées avec un adhésif, et le mat fibreux étant sous la forme de fragments.

5. Procédé selon la revendication 4, dans lequel le matériau composite est fabriqué à une température comprise entre 70° C et 220° C et sous une pression comprise entre 15 et 200 kg/cm².

6. Procédé selon la revendication 4 ou 5, dans lequel le liant polymère est utilisé en tant que solution aqueuse.

7. Procédé selon l'une des revendications 4 à 6, dans lequel on utilise au moins 5 portions en poids et 350 portions en poids au plus de liant polymère pour cent portions en poids de matériau de renfort.

8. Matériau composite que l'on peut obtenir en mettant en oeuvre l'une des revendications 4 à 7.

9. Stratifié dans lequel au moins une couche comprend le matériau composite selon la revendication 8.
